# EUROPEAN PATENT SPECIFICATION

(11) **EP 0 855 832 B1**
(45) Date of publication and mention of the grant of the patent: **16.04.2003**
(21) Application number: 98100215.7
(22) Date of filing: 08.01.1998
(51) Int. Cl.: H04N 1/60, H04N 1/407

(54) **Picture quality stabilizer for a color laser printer**
Bildqualitätstabilisator für einen Farblaserdrucker
Stabilisateur de la qualité d'image pour une imprimante laser couleur

(30) Priority: 08.01.1997 JP 114397
(43) Date of publication of application: 29.07.1998
(73) Proprietor: Hitachi, Ltd., Chiyoda-ku, Tokyo 101 (JP)
(72) Inventor: Shibuya, Takeshi, Niihari-gun, Ibaraki 315 (JP); Satou, Tatsunari, Tsuchiura-shi, Ibaraki 300 (JP); Seino, Taisaku, Tsuchiura-shi, Ibaraki 300 (JP)
(74) Representative: Beetz & Partner Patentanwälte

(56) References cited:
- EP-A- 0 325 395
- EP-A- 0 370 482
- EP-A- 0 582 997
- US-A- 5 109 275

## Description

### BACKGROUND OF THE INVENTION

The present invention relates to a color laser printer, specifically to a color laser printer enabling to stabilize the quality of the image in response to the environmental change.

The printer using the electro-photographic method forms the electrostatic latent image by giving the electric charge to the photosensitive body by using the laser beam, and performs image development by neutralizing the electrostatic latent image with the toner charged with the charge with the opposite polarity. As disclosed in Japanese Patent Application Laid-Open Number 07-128974 (1995), as the amount of charge of the toner particle changes due to the environmental condition of temperature and humidity. For example, under the high temperature and the high humidity, the amount of charge per single toner particle becomes smaller, and under the low temperature and the low humidity, the amount of charge per single toner particle becomes larger. Therefore, it should be noted in the general characteristic of the electrophotographic method that larger amount of toner is required for neutralizing the toner under the environmental condition of the high temperature and the high humidity and the reproduced image has higher density rather than under the environmental condition of the low temperature and the low humidity.

In the prior art, in order to solve the above problem, what is proposed as in Japanese Patent Application Laid-Open Number 07-128974 (1995) is controlling the development apparatus by using the toner density detector and the sensor for detecting temperature and humidity, and what is proposed as in Japanese Patent Application Laid-Open Number 6-64238 (1994) is a method for correcting the laser intensity and switching the gamma correction tables by using the density sensor mounted on the photosensitive body.

### SUMMARY OF THE INVENTION

However, in the prior art, as the relation between the number of toner particles and the printing density (lightness or saturation) is not necessarily linear, the control of toner density and the control of the maximum laser intensity may stabilize the whole paint density of the reproduced image, but there still remains such a problem that the intermediate gray level density can not stabilized.

With the method as disclosed in Japanese Patent Application Laid-Open Number 6-64238 (1994) in which a density sensor is mounted on the photosensitive body and the gamma correction tables are switched, as the image output is required for calibration, it is difficult to respond to the dynamic change in the environmental condition promptly. This makes it inconvenient for users to operate the office printer operated continuously all day long. Even in selecting and switching the gamma correction tables in response to the detected parameters for temperature and humidity, many tables are required in order to respond smoothly to both the temperature and the humidity, On the other hand, in trying to reduce the number of tables, what is caused is such a problem that the reproduced image becomes unstable at the transitive operation condition with which the tables to be selected are switched.

In case of color laser printers, as the characteristics of the color ink materials are different from one another due to the environmental condition, and the change in the characteristic for the combination of the color ink materials when color mixture can not be resolved, there is such a problem the change in the color balance can not be corrected.

EP 0 370 482 A1 discloses a color electrophotographic method in which superimposed developments of various colors are corrected for different charging properties, said correction also being made in accordance with temperature and humidity.

An object of the present invention is to provide a dynamic correction function for establishing the stable gray scale characteristic and color balance when the environmental condition of temperature and humidity changes in operating a color laser printer.

The above object is attained by using a sensor for measuring the environmental temperature and humidity, a gray scale correction means for correcting individually the gray level of each color of Cyan (C), Magenta (M), Yellow (Y) and Black (K), and a mixed color correction means for correcting the value of the gray level of the individual color already corrected with the gray level correction means, and modifying the internal parameters of those correction means in responsive to the change in the environmental temperature and humidity.

A picture equality stabilizer according to the present invention is set out in claim 1.

With the configuration described above, by modifying the gray scale correction coefficients for the individual colors C, M, Y and K in responsive to the temperature and the humidity detected by the temperature and humidity sensor, more stable gray level characteristic can be obtained for the individual single color. In addition, by modifying the coefficients of the mixed color correction means for correcting the effect of mixing color inks, the reproduced color of the mixed color ink can be corrected and a stable color balance can be established.

These and other features of the invention that will be apparent to those skilled in the art from the following detailed description of the invention, taken together with the accompanying drawings.

### BRIEF DESCRIPTION OF THE DRAWINGS

In the drawings:
FIG. 1 shows a schematic diagram of data processing in the present invention.
FIG. 2 shows a reference temperature and humidity environment.
FIG. 3 shows an example of the lightness gray level characteristic.

Corresponding numerals and symbols in different figures refer to corresponding parts unless otherwise specified.

### DESCRIPTION OF THE PREFERRED EMBODIMENTS

Now, an embodiment of the present invention is described by referring to the drawings.

At first, the outline of the procedure is described.

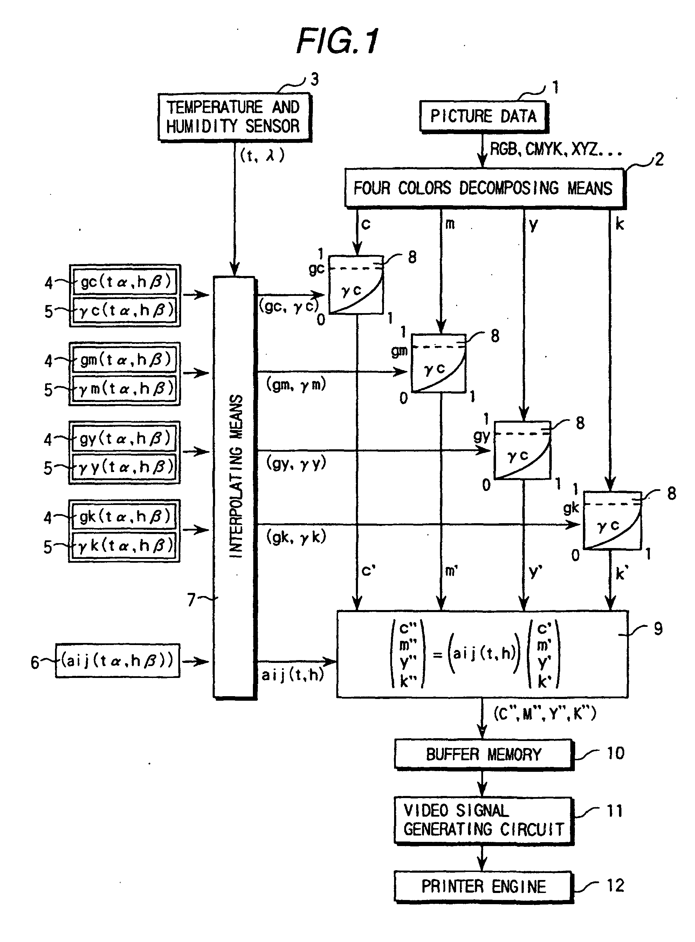

FIG. 1 shows a schematic diagram of data processing in the present invention. The image data 1 supplied by the main computer and so on are decomposed by 4-color decomposing means 2 into point-ordered data represented by a combination of the values of gray levels of the individual colors, Cyan (C), Magenta (M), Yellow (Y) and Black (K). The gray level value is an integer generally defined to be between 0 and 255. For simplifying the explanation to be described below, the gray level value is normalized with 255 so as to be between 0 and 1. The whole black print image corresponds to the case that the gray level value is 1.

The individual gray level value of (C, M, Y, K) is processed with the gray level correction generally designated "gamma correction" by using the gray level correction means 8. In this embodiment, the gray level value C for Cyan is corrected by the following formula, for example, 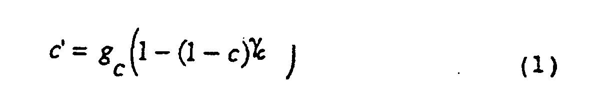 in which g_{c} and γ_{c} are corrected by the table interpolation means 7 with the method to be described later from the values in the upper-bound correction table 4 and the gamma correction table 5. The upper-bound correction table 4 contains the gray level value when the saturation (or lightness) reaches and keeps a designated constant value as the gray level value increases with respect to the relation between the gray level and the saturation.

Similarly, the table interpolation means is applied to the gray level values of M, Y and K. As the temperature and humidity characteristics of the color ink materials are generally different from one another, the upper-bound correction table 4 and the gamma correction table 5 are prepared for the individual color in this embodiment.

The gray level correction means 8 corrects the effect of the temperature and humidity on the individual gray scale characteristic of the single color, and the failure in the color balance caused by the effect of the temperature and humidity on the print characteristic with respect to the color superposition is corrected by the mixed color correction means 9 to be described below.

The mixed color correction means 9 uses a simple linear transformation, in which the coefficient aᵢⱼ is defined by interpolating the values in the mixed color correction table 6 in responsive to the output from the temperature and humidity sensor 3.

The gray scale values (C", M", Y", K") with their gamma characteristics and color balances corrected for the temperature and humidity environment by those correction means are stored in the buffer memory 10, and next, are supplied as the video signals to the printer engine 12 by the video signal generation circuit 11 in the plane order, and finally, the printed output is obtained.

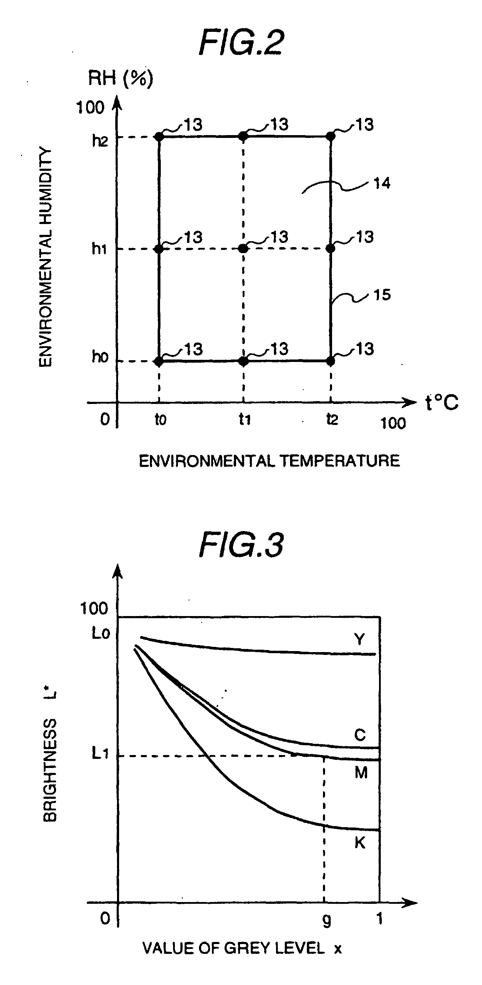

Next, the detail features of the correction table and the table interpolation means are described. The individual correction table is composed of the correction values for the reference environment 13 shown in FIG. 2. In FIG. 2, the reference environment 13 is so defined as to a set of 9 combinations of the low temperature (tₒ), the room temperature (t₁) ; the high temperature (t₂), and the low humidity (h₀), the room humidity (h₁), the high humidity (h₂).

An example of the lightness characteristic without correction measured for one environment of the reference environment 13 is shown in FIG. 3. The parameters g in the upper-bound correction table 4 and the parameters γ in the gamma correction table 5 are defined for the individual colors at the individual environments so that the error between the lightness characteristic shown in FIG. 3 and the model formula shown below may be minimized.

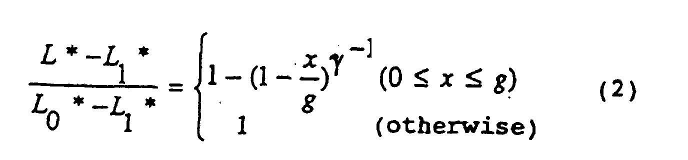

Though g and γ are so defined as to make linear the lightness gray level characteristics of the individual colors, almost the similar result can be obtained by making linear the chromaticity gray scale characteristic. However, as the chromaticity of Black color is 0 in all the gray levels, it is desirable that the lightness gray level should be made linear for Black color.

The coefficient A = (aᵢⱼ)of the mixed color correction table 6 are obtained in the following manner. At first, based on typically measured color values with the (n × n × n × n) combinations of the reference n gray levels of the individual colors, C, M, Y and K, the reproduced color estimation function for interpolating and estimating the measured color value corresponding the arbitrary combination of the gray level value is formed. As for this interpolation function, for example, the following scheme based on the linear interpolation can be considered.

The gray level values of the colors C, M, Y and K to be interpolated are designated c, m, y and k. Assume that the gray level values of the measurement points with their gray level values closest to the individual gray level values are c0, c1, m0, m1, y0, y1, k0 and k1, in which c0 ≦ c ≦c1, m0 ≦ m ≤m1, y0 ≦ y ≦ y1, and k0 ≦ k ≦ k1. Suppose that the colorimetric system is L*ab of CIE, the following formulae can be defined.$\text{L} \text{*(} \text{c,m,y,k} \text{)} \text{=} {\text{Σ(-1)}}^{\text{p}} {\text{}}^{\text{+}} {\text{}}^{\text{q}} {\text{}}^{\text{+}} {\text{}}^{\text{r}} {\text{}}^{\text{+}} {\text{}}^{\text{s}} \text{(} \text{c} \text{-} {\text{c}}_{\text{p}} \text{)(} \text{m} \text{-} {\text{m}}_{\text{q}} \text{)(} \text{y} \text{-} {\text{y}}_{\text{r}} \text{)(} \text{k} \text{-} {\text{k}}_{\text{s}} \text{)} \text{L} \text{*(} {\text{c}}_{\text{p}} \text{,} {\text{m}}_{\text{q}} \text{,} {\text{y}}_{\text{r}} \text{,} {\text{k}}_{\text{s}} \text{)} \text{p,q,r,} \text{s ∈ {0,1}}$$\text{b} \text{*(} \text{c} \text{,} \text{m} \text{,} \text{y} \text{,} \text{k} \text{)} {\text{=Σ(-1)}}^{\text{p}} {\text{+}}^{\text{q}} {\text{+}}^{\text{r}} {\text{+}}^{\text{s}} \text{(} {\text{c-c}}_{\text{p}} \text{)(} {\text{m-m}}_{\text{q}} \text{)(} {\text{y-y}}_{\text{r}} \text{)(} {\text{k-k}}_{\text{s}} \text{)} \text{b*} \text{(} {\text{c}}_{\text{p}} {\text{,m}}_{\text{q}} {\text{,y}}_{\text{r}} {\text{,k}}_{\text{s}} \text{)} \text{p,q,r,s} \text{∈ {0,1}}$$\text{a*} \text{(} \text{c,m,y,k} \text{)} {\text{= Σ(-1)}}^{\text{p}} {\text{}}^{\text{+}} {\text{}}^{\text{q}} {\text{}}^{\text{+}} {\text{}}^{\text{r}} {\text{}}^{\text{+}} {\text{}}^{\text{s}} \text{(} \text{c} \text{-} {\text{c}}_{\text{p}} \text{)(} \text{m} \text{-} {\text{m}}_{\text{q}} \text{)(} \text{y} \text{-} {\text{y}}_{\text{r}} \text{)(} \text{k} \text{-} {\text{k}}_{\text{s}} \text{)} \text{a} \text{*(} {\text{c}}_{\text{p}} \text{,} {\text{m}}_{\text{q}} {\text{,y}}_{\text{r}} {\text{,k}}_{\text{s}} \text{)} \text{p,q,r,s} \text{∈ {0,1}}$

This reproduced color estimation function is made to be obtained for the individual environment of the reference environment 13, the mixed color correction coefficient A = (aᵢⱼ) at the (tᵢ, hⱼ) environment is determined by the least square method for minimizing the error between the reproduced color of the room temperature and humidity (t₁, h₁) environment for the combination (c, m, y, k) of the gray level values and the reproduced color of the (tᵢ, hⱼ) environment for the combination (c', m', y', k') obtained by linear conversion with the matrix A = (aᵢⱼ)from the combination (c, m, y, k).

The mixed color correction for four colors (c, m, y, k) is considered in the above description. In case that the effect of Black color on the color balance can be neglected, it is normally sufficient to consider the mixed color correction only for three colors (c, m, y).

The table correction means 7 for the upper-bound correction table 4, the γ correction table 5 and the mixed color correction table 6 for the individual environment of the reference environment 13 obtained so far is performed with the double linear interpolation scheme defined by the following formula.$\text{g(t,h) =} \frac{{\text{t}}_{\text{i}} {\text{}}_{\text{+1}} \text{-} \text{t}}{{\text{t}}_{\text{i}} {\text{}}_{\text{+1}} \text{-} {\text{t}}_{\text{i}}} \frac{{\text{h}}_{\text{j}} {\text{}}_{\text{+1}} \text{-} \text{h}}{{\text{h}}_{\text{j}} {\text{}}_{\text{+1}} \text{-} {\text{h}}_{\text{j}}} {\text{γ(t}}_{\text{i}} {\text{, h}}_{\text{j}} \text{)} \text{+} \frac{\text{t} \text{-} {\text{t}}_{\text{i}}}{{\text{t}}_{\text{i}} {\text{}}_{\text{+1}} \text{-} {\text{t}}_{\text{i}}} \frac{{\text{h}}_{\text{j}} {\text{}}_{\text{+1}} \text{-} \text{h}}{{\text{h}}_{\text{j}} {\text{}}_{\text{+1}} \text{-} {\text{h}}_{\text{j}}} \text{γ(} {\text{t}}_{\text{i}} {\text{}}_{\text{+1}} \text{,} {\text{h}}_{\text{j}} \text{)} \frac{{\text{t}}_{\text{i}} {\text{}}_{\text{+1}} \text{-} \text{t}}{{\text{t}}_{\text{i}} {\text{}}_{\text{+1}} \text{-} {\text{t}}_{\text{i}}} \frac{{\text{h - h}}_{\text{j}}}{{\text{h}}_{\text{j}} {\text{}}_{\text{+1}} \text{-} {\text{h}}_{\text{j}}} \text{γ(} {\text{t}}_{\text{i}} {\text{,h}}_{\text{j}} {\text{}}_{\text{+1}} \text{)} \frac{{\text{t - t}}_{\text{1}}}{{\text{t}}_{\text{i}} {\text{}}_{\text{+1}} \text{-} {\text{t}}_{\text{i}}} \frac{{\text{h- h}}_{\text{j}}}{{\text{h}}_{\text{j}} {\text{}}_{\text{+1}} \text{-} {\text{h}}_{\text{j}}} \text{γ(} {\text{t}}_{\text{i}} {\text{}}_{\text{+1}} \text{,} {\text{h}}_{\text{j}} {\text{}}_{\text{+1}} \text{)}$ In the above expression, tᵢ ≦ t ≦ t₍ᵢ₊₁₎, hᵢ ≦ h ≦ h₍ᵢ₊₁₎, for (i, j = 0, 1). The value of g for the environment outside the region 14 is defined to be the interpolated value at the most closest boundary 15. The interpolation scheme for the correction coefficient for another g's and aᵢⱼ's can be established similarly.

As described above, the picture quality stabilizer for compensating the changes in the gray level characteristic (g characteristic) and the color balance for the temperature and humidity environment can be obtained.

According to the above described components including the temperature and humidity sensor, the upper-bound correction value table, the g correction table, the mixed color correction table, and the gray level correction means and the mixed color correction means with the parameters determined by the means for interpolating those tables, the gray level characteristic and the color balance for the arbitrary temperature and humidity environment can be compensated effectively.

While this invention has been described with reference to illustrative embodiments, this description is not intended to be construed in a limiting sense. Various modifications and combinations of the illustrative embodiments of the invention will be apparent to those skilled in the art upon reference to the description. It is, therefore, intended that the appended claims encompass any such modifications or embodiments.

## Claims

1. A picture quality stabilizer for a color laser printer in which a reproduced color is determined by specifying a gray level value of a plurality of colors, comprising
a sensor (3) for measuring an environment temperature and humidity; and
a mixed color correction means (4-9);
**characterized in that**
said mixed color correction means (4-9) correcting a color balance in response to a value measured by said sensor by performing a linear transformation represented by a matrix including a component defined by a continuos function of either of temperature or humidity.

2. A picture quality stabilizer for a color laser printer of Claim 1, comprising
a gray level correction means (4, 5, 7, 8) for correcting a gray level of an individual color in response to a value measured by said sensor, and
a mixed color correction means (6, 7, 9) for correcting an individual gray level value of an individual color corrected said gray level correction means in responsive to measured temperature and humidity and a superposition of colors.

3. A picture quality stabilizer for a color laser printer of Claim 2, wherein
said gray level correction means is a continuous function of either of temperature or humidity.

4. A picture quality stabilizer for a color laser printer of Claim 2 or 3, wherein
said gray level correction means includes an upper-bound correction value g (4) and a gamma correction value γ (5) and performs a transformation on g and γ by a continuous function of either of temperature or humidity represented by y = g (1 - (1-x)^{γ}), in which x is input gray level value and y is output gray level value (0 ≤ x, y ≤ 1).

## Patentansprüche

1. Bildqualität-Stabilisierungsvorrichtung für einen Farblaserdrukker, bei dem eine wiedergegebene Farbe durch Spezifizierung eines Grauwerts mehrerer Farben bestimmt wird, mit
einem Sensor (3) zum Messen der Umgebungstemperatur und der Feuchtigkeit; und
einer Mischfarbenkorrektureinrichtung (4-9);
**dadurch gekennzeichnet, daß**
die Mischfarbenkorrektureinrichtung (4-9) die Farbabstimmung nach Maßgabe eines von dem Sensor gemessenen Werts korrigiert, indem eine lineare Transformation durchgeführt wird, die durch eine Matrix dargestellt wird, die eine Komponente aufweist, die durch eine kontinuierliche Funktion entweder der Temperatur oder der Feuchtigkeit definiert ist.

2. Bildqualität-Stabilisierungsvorrichtung für einen Farblaserdrukker nach Anspruch 1, mit
einer Grauwertkorrektureinrichtung (4, 5, 7, 8) zur Korrektur eines Grauwerts einer bestimmten Farbe nach Maßgabe eines vom Sensor gemessenen Werts, und
einer Mischfarbenkorrektureinrichtung (6, 7, 9) zur Korrektur eines von der Grauwertkorrektureinrichtung korrigierten Grauwerts einer einzelnen Farbe nach Maßgabe der gemessenen Temperatur und Feuchtigkeit und der Überlagerung der Farben.

3. Bildqualität-Stabilisierungsvorrichtung für einen Farblaserdrukker nach Anspruch 2, bei der die Grauwertkorrektureinrichtung eine kontinuierliche Funktion der Temperatur oder der Feuchtigkeit ist.

4. Bildqualität-Stabilisierungsvorrichtung für einen Farblaserdrukker nach Anspruch 2 oder 3, bei der die Grauwertkorrektureinrichtung einen oberen Korrekturwert g (4) aufweist und einen Gamma-Korrekturwert γ (5) und eine Transformation zu g und γ mittels einer kontinuierlichen Funktion entweder der Temperatur oder der Feuchtigkeit ausführt, die gegeben ist durch y = g (1 - (1-x)^{γ}), wobei x der eingegebene Grauwert und y der ausgegebene Grauwert (0 ≤ x, y ≤ 1) ist.

## Revendications

1. Stabilisateur de la qualité d'image pour une imprimante laser couleur, dans lequel une couleur reproduite est déterminée en spécifiant une valeur de niveau de gris parmi une pluralité de couleurs, comprenant :
un capteur (3) pour mesurer la température et l'humidité d'un environnement ; et
un moyen de correction des couleurs mixées (4 - 9) ;
**caractérisé en ce que**
ledit moyen de correction des couleurs mixées (4 - 9) corrigeant une balance des couleurs en réponse à une valeur mesurée par ledit capteur en effectuant une transformation linéaire représentée par une matrice comprenant un composant défini par une fonction continue soit de la température, soit de l'humidité.

2. Stabilisateur de la qualité d'image pour une imprimante laser couleur selon la revendication 1, comprenant
un moyen de correction des niveaux de gris (4, 5, 7, 8) pour corriger un niveau de gris d'une couleur individuelle en réponse à une valeur mesurée par ledit capteur, et
un moyen de correction des couleurs mélangées (6, 7, 9) pour corriger une valeur de niveaux de gris d'une couleur individuelle corrigée par ledit moyen de correction des niveaux de gris en réponse à la température et à l'humidité mesurées et une superposition des couleurs.

3. Stabilisateur de la qualité d'image pour une imprimante laser couleur selon la revendication 2, dans lequel ledit moyen de correction des niveaux de gris est une fonction continue soit de la température, soit de l'humidité.

4. Stabilisateur de la qualité d'image pour une imprimante laser couleur selon la revendication 2 ou 3, dans lequel ledit moyen de correction des niveaux de gris comprend une valeur de correction de limite supérieure *g* (4) et une valeur de correction gamma γ (5) et effectue une transformation sur *g* et γ par le biais d'une fonction continue soit de la température, soit de l'humidité représentée par l'égalité y = *g* (1 - (1-x)^{γ}), dans laquelle x est une valeur de niveaux de gris d'entrée et y est une valeur de niveaux de gris de sortie (0 ≤ x, y ≤ 1).
